# EUROPÄISCHE PATENTANMELDUNG

(11) **EP 1 543 903 A1**
(43) Veröffentlichungstag der Anmeldung: **22.06.2005**
(21) Anmeldenummer: 04023036.9
(22) Anmeldetag: 28.09.2004
(51) Int. Cl.: B23B 5/16, B21D 41/02, B21D 19/00

(54) **Rohrendbearbeitungsvorrichtung**

(30) Priorität: 17.12.2003 DE 20319565 U
(71) Anmelder: IPA Produktions- und Vertriebsges.m.b.H., 3163 Rohrbach (AT)
(72) Erfinder: Ogris, Bernhard, Dipl.-Ing., 2511 Pfaffstätten (AT)
(74) Vertreter: Schwabe - Sandmair - Marx

(57) **Zusammenfassung**

Die Erfindung betrifft eine Rohrendenbearbeitungsvorrichtung, insbesondere für die Bearbeitung von Verbundrohren mit mindestens einer Metall- und mindestens einer Kunststoffschicht mit einem Zentrierabschnitt (32), um die Vorrichtung in Bezug auf ein Rohrende zu zentrieren, einem Angriffsabschnitt (14), um eine Kraft auf die Vorrichtung auszuüben, einem Entgratabschnitt (12, 18), die durch einen Aufweitabschnitt (16) der dem Entgratabschnitt (12, 18) in Rohreinführrichtung (50) vorgelagert ist.

## Beschreibung

Die Erfindung betrifft eine Rohrendenbearbeitungsvorrichtung, insbesondere zur Bearbeitung von Verbundrohren mit wenigstens einer Kunststoffschicht und einer Metallschicht, die einen Zentrierabschnitt aufweist, um die Vorrichtung in Bezug auf ein Rohrende zu zentrieren, einen Angriffsabschnitt umfasst, um eine Kraft auf die Vorrichtung ausüben zu können, und ferner einen Entgratabschnitt vorzuweisen hat, gemäß dem Oberbegriff des Anspruchs 1.

Im Stand der Technik sind Rohrendenbearbeitungsvorrichtungen bekannt, die einerseits dazu bestimmt sind, ein Rohrende zu entgraten, und andererseits dazu, ein Rohrende aufzuweiten. Soll nämlich ein Rohrende etwa eines Kunststoff-Metall-Kunststoff-Verbundrohres über eine Verbindung, etwa ein Fitting angeschlossen werden, muss das Ende des Rohres auf eine Stützhülse des Fittings aufgeschoben werden. Das Rohrende ist jedoch beim Abschneiden bzw. Ablängen deformiert worden und weist regelmäßig einen Grat auf, der das Aufschieben des Rohrendes auf die Stützhülse erschwert oder sogar unmöglich macht. Um den störenden Grat zu entfernen, ist folglich eine Entgratvorrichtung von Nöten.

Andererseits ist eine weitere Rohrendenbearbeitungsvorrichtung bekannt, die dazu dient, ein Rohrende aufzuweiten, um das Rohrende leichter auf ein Fitting aufschieben zu können. Ein Rohrende wird auch aufgeweitet, um eine Einschnürung des Rohrinnendurchmessers im Bereich einer Verbindung bzw. eines Fittings zu vermeiden. D.h., üblicherweise wird der Rohrinnendurchmesser durch das Einbringen eines Fittings in ein Rohr im Fittingbereich eingeschnürt, da die Stützhülse einen geringeren Innendurchmesser als das Rohr hat. Durch diese Einschnürung kommt es zu Druckschwankungen und ferner zu vollkommen unerwünschten Strömungsgeräuschen des Wassers bzw. der Flüssigkeit innerhalb von fertiggestellten Rohrleitungssystemen. Um diesen Nachteil vermeiden zu können, wird ein Rohrende aufgeweitet, so dass eine Stützhülse einer Rohrverbindung bzw. eines Rohrfittings mit größerem Außendurchmesser in das Rohrende eingeschoben werden kann, wobei dieses Fitting einen Innendurchmeser hat, so dass der Innendurchmesser des Rohres relativ zu dem Innendurchmesser der Stützhülse des Fittings keine Einschnürung hat. Druckschwankungen und Leitungsgeräusche können dadurch vermieden werden. Um eine solche Aufweitungsvorrichtung zu realisieren, sind unterschiedliche Werkzeuge im Stand der Technik bekannt.

Nachteilig ist allerdings, dass der Fachmann hier immer auf mehrere Werkzeuge angewiesen ist, um ein Rohrende anzuschließen. Der Fachmann braucht neben einem Verbindungswerkzeug, etwa einer Presszange, ein Entgratwerkzeug und ein Aufweitwerkzeug.

Es ist die Aufgabe gemäß der vorliegenden Erfindung, eine Rohrendenbearbeitungsvorrichtung zur Verfügung zu stellen, mit der die Bearbeitung von Rohrenden, insbesondere von Rohrenden eines Verbundrohres mit mindestens einer Metallschicht, ermöglicht wird, wobei lediglich ein einziger Arbeitsgang mit einem Werkzeug zum Einsatz gelangt. Insbesondere soll eine Vorrichtung zur Verfügung gestellt werden, die zwei Bearbeitungen eines Rohrendes in einem Arbeitsgang erledigt.

Gemäß der Erfindung wird die genannten Aufgabenstellung dadurch gelöst, dass ein Aufweitabschnitt an der gattungsgemäßen Rohrendenbearbeitungsvorrichtung vorgesehen wird, der dem Entgratabschnitt in Rohreinführrichtung vorgelagert ist. Hierdurch kann mit der erfindungsgemäßen Rohrendenbearbeitungsvorrichtung in einem einzigen Arbeitsgang sowohl das Rohrende aufgeweitet werden, als auch ein störender Grat am Rohrende abgetragen bzw. weggeschnitten werden.

Vorteilhafterweise ist der Aufweitabschnitt mit einem im Außendurchmesser in Rohreinführrichtung zunehmenden Aufweitbereich versehen, der mit einer Vortriebsstruktur, etwa einem Gewindegang bzw. einem Gewinde ausgebildet ist. Es kann auch ein zwei- oder mehrgängiges Gewinde eingesetzt werden. Ein dreigängiges Gewinde kann zentrierend wirken. Die Vortriebsstruktur kann sich insbesondere durch einen Rotationsantrieb, der über den Angriffsabschnitt auf das erfindungsgemäße Werkzeug bzw. die erfindungsgemäße Vorrichtung ausgeübt wird, an dem Innendurchmesser des Rohres, d.h., der Innenwand des Rohres, etwa einer Kunststoff- oder Metallwand, festsetzen. Durch Drehung der erfindungsgemäßen Vorrichtung kann dann die rotative Antriebskraft in eine Vortriebskraft umgesetzt werden, die den Aufweitabschnitt in das Rohrende hineintreibt, um dieses zunächst aufzuweiten und letztendlich auch das Entgratmesser bzw. die Entgratmesser anzuwenden, um das Rohrende insbesondere an dessen Innendurchmesser zu entgraten.

Dabei kann der Aufweitabschnitt einen Aufweitbereich aufweisen, der wenigstens in etwa konvex oder konkav ist. Natürlich kann er auch sich in Rohreinführrichtung linear erweiternd ausgebildet sein. Die konkrete Form der Durchmessererweiterung ist dabei nicht unbedingt ausschlaggebend.

Vorteilhafterweise ist die Vortriebsstruktur des Aufweitbereiches so ausgebildet, dass diese mit zunehmendem Außendurchmesser des Aufweitbereiches eine zunehmende Antriebskraft erzeugt. Dies kann im Falle der Verwendung eines Gewindes als Vortriebsstruktur besonders vorteilhaft dadurch erreicht werden, dass im Aufweitbereich in einer Zone mit geringem Außendurchmesser das Gewinde eine größere Steigung aufweist. In einem Bereich mit größerem Außendurchmesser muss das Gewinde dann eine kleinere Steigung haben, um die auf den Angriffsabschnitt ausgeübte Drehkraft mittels eines größeren Drehmomentes verstärkt zur Wirkung bringen zu können, derart, dass, wenn das Rohr immer weiter aufgeweitet wird und immer größere Widerstandskräfte entgegensetzt, auch eine größere Vortriebskraft zur Verfügung steht, um den elastischen bzw. auch plastischen Widerstandskräften des Rohrmaterials Paroli bieten zu können. Die Gewindesteigung kann kontinuierlich erhöht werden. Es ist auch möglich, die Gewindesteigung sprunghaft zu erhöhen, überproportional, mit einer Exponential-Funktion, oder dgl.

Vorteilhafterweise kann die Vortriebsstruktur etwa dort enden, wo der Außendurchmesser des Aufweitbereiches bzw. des Aufweitabschnittes seinen größten Wert erreicht. Hier kann ein Bereich mit konstantem Durchmesser anschließen, da hier bereits maximal aufgeweitet worden ist und das Rohr nur noch in dem aufgeweiteten Innen- bzw. Außendurchmesser stabil gehalten werden muss. In diesem Zustand kann dann das Rohrende dem Entgratabschnitt zugeführt werden.

Durch die geringere Steigung wird auch erreicht, dass das zu bearbeitende Rohrende mit geringer Geschwindigkeit gegen das bzw. die Entgratmesser fährt.

Ein vorteilhaft vorgesehener Schutzring ist so um die Entgratmesser angeordnet, dass ein Bediener durch diese nicht gefährdet werden kann.

Über unterschiedliche Steghöhen des Gewindes bzw. von Gewindebereichen der Vortriebsstruktur kann ebenfalls die Kraft variiert werden, die von der erfindungsgemäßen Vorrichtung auf ein Rohrende übertragen werden. So kann ein Gewinde mit größerer Steghöhe tiefer in eine Innenwandung eines Fluidrohres eingreifen, als eines mit kleiner Steghöhe. Gleichermaßen lässt sich eine Variation über ein schärferes oder ein stumpferes Gewinde erzielen.

Festzuhalten ist, dass die Erfindung in bezug auf sämtliche Rohrarten, bevorzugt mit wenigstens am Rohrende glatter Wandung, vorteilhaft einsetzbar ist, also insbesondere auch für Gas- und Flüssigkeitsleitungsrohre.

Zwischen dem Aufweitabschnitt und dem Entgratabschnitt kann eine Einschnürung vorgesehen sein, so dass das Rohrende in einem Abstand gehalten ist, um Reibungswiderstände zu verringern.

Nachfolgend wird die vorliegende Erfindung anhand von bevorzugten Ausführungsformen näher erläutert, wobei weitere Merkmale, Vorzüge und Zielsetzungen gemäß der Erfindung offenbart werden. In den Darstellungen zeigen:
- Fig. 1a: einen axialen Längsschnitt durch eine Vorrichtung mit Merkmalen gemäß der Erfindung;
- Fig. 1b: eine axiale Draufsicht auf die Vorrichtung gemäß Fig. 1a;
- Fig. 2a: eine weitere Ausführungsform mit Merkmalen gemäß der Erfindung in einem axialen Längsschnitt; und
- Fig. 2b: eine axiale Draufsicht auf die Ausführungsform der Vorrichtung gemäß Fig. 2a.

In den Figuren sind gleiche oder zumindest funktionsgleiche Bestandteile mit gleichen Bezugszeichen benannt, so dass eine mehrfache Erörterung gleicher bzw. gleich wirkender Teile zu erübrigen ist.

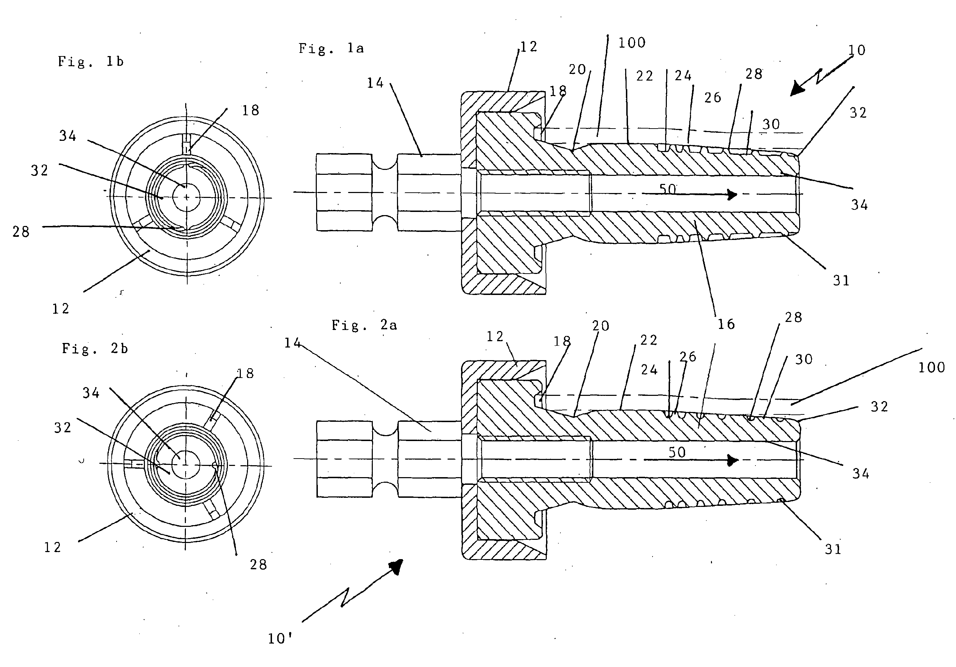

In Fig. 1a ist eine Rohrendenbearbeitungsvorrichtung 10 mit einem Zentrierabschnitt 32, einem Angriffsabschnitt 14 und einem Entgratabschnitt 12, 18 abgebildet. Dem Entgratabschnitt 12, 18 ist ein Aufweitabschnitt 16 in Rohreinführrichtung, die durch den Pfeil 50 gekennzeichnet ist, vorgelagert. Ein Schutzring bzw. eine Schutzkappe 12 schirmt einen Benutzer von den Messern 18 ab.

Der Zentrierabschnitt 32 weist einen Außendurchmesser auf, der geringer ist, als der Innendurchmesser eines Rohres 100, das Andeutungsweise in der Fig. 1a dargestellt ist. Hierdurch kann der vordere Bereich des Zentrierabschnittes leicht in den Innendurchmesser des zu bearbeitenden Rohrendes eingeführt werden. Gleich zu Beginn des Zentrierabschnittes ist eine Vortriebsstruktur bzw. ein Gewinde 31 vorgesehen, das sich vorteilhafterweise ausgehend von dem Zentrierabschnitt bis hin zum größten Durchmesser des Aufweitabschnittes 16 erstreckt.

Gleich beim Einführen des Zentrierabschnittes 32 kann durch Aufbringen einer Rotationskraft auf den Angriffsabschnitt 14, etwa mit einem Schraubschlüssel, einer Ratsche, einem elektrisch oder hydraulisch angetriebenen Antriebsgerät, oder dgl. eine rotative Kraft auf die Vorrichtung 10 ausgeübt werden, so dass sich das Gewinde 31 in dem Material der Innenwandung des zu bearbeitenden Rohrendes "festbeißt", und durch die Steigung des Gewindes wird die erfindungsgemäße Vorrichtung in Rohreinführrichtung 50 in das Rohrende hineingetrieben. Zur Materialeinsparung bzw. Gewichtseinsparung kann die erfindungsgemäße Vorrichtung 10 innen hohl sein, so dass sich eine hülsenartige Form 34 ergibt.

Im Anschluss an den Zentrierabschnitt folgt ein Aufweitbereich mit mehreren Zonen. In einer ersten Zone 30 ist das Gewinde 28 mit einer größeren Steigung ausgebildet, da hier noch keine besonders große Kraft ausgeübt werden muss, um das Rohr aufzuweiten. Mit zunehmender Aufweitung in einer Zone 24 wird die Steigung des Gewindes klein, so dass ein hohes Drehmoment erzeugt wird, um den hohen Kräften gewachsen zu sein, die bei der Aufweitung des Rohrendes als Widerstand vom Rohrmaterial entgegengesetzt werden. An die Zone 24 mit größtem Durchmesser und mit geringster Gewindesteigung schließt ein Bereich 22 an, der einen im Wesentlichen konstanten Durchmesser hat, da hier das Rohr bereits maximal aufgeweitet worden ist und keiner weiteren Aufweitung bedarf. Natürlich kann das Gewinde auch hier fortgesetzt werden, falls etwa das Rohrmaterial aufgrund seines hohen Reibungswiderstandes in dem Bereich 22 für dessen Vortriebsbewegung noch einen Kraftaufwand erfordert.

An den Bereich 22 schließt eine Einschnürung 20 an, die beispielsweise vorgesehen sein kann, um die Reibungskräfte zu verringern, da das Rohr hier bereits maximal aufgeweitet ist und die Aufweitung und damit der größere Durchmesser bereits in das Rohrmaterial dauerhaft eingeprägt worden ist. An die Einschnürung 20 schließt dann der Entgratbereich 12 mit dem Entgratmesser 18 bzw. mehreren Entgratmessern 18 an.

Die Fig. 1b zeigt die prinzipielle Anordnung eines Paares von Entgratmessern 18 und die Staffelung der Durchmesser des Zentrierbereiches und daran anschließende Bereiche.

In Fig. 1a ist der Aufweitbereich 30, 24 konvex ausgebildet, während der Aufweitbereich des Aufweitabschnittes bzw. des Aufweitdorns 16 gemäß den Fig. 2a, 2b konkav ist.

Da ansonsten die technischen Prinzipien der Ausführungsform 10 gemäß den Fig. 1a, 1b denen der Ausführungsform 10' gemäß den Fig. 2a, 2b entspricht, wird in Bezug auf die Bestandteile gemäß den Fig. 2a und 2b auf die Beschreibung gemäß den Fig. 1a, 1b verwiesen.

## Patentansprüche

1. Rohrendenbearbeitungsvorrichtung, insbesondere für die Bearbeitung von Verbundrohren mit mindestens einer Metall- und mindestens einer Kunststoffschicht mit den folgenden Merkmalen:
- einem Zentrierabschnitt (32), um die Vorrichtung in Bezug auf ein Rohrende zu zentrieren;
- einem Angriffsabschnitt (14), um eine Kraft auf die Vorrichtung auszuüben;
- einem Entgratabschnitt (12, 18),
**gekennzeichnet durch** einen Aufweitabschnitt (16) der dem Entgratabschnitt (12, 18) in Rohreinführrichtung (50) vorgelagert ist.

2. Rohrendenbearbeitungsvorrichtung nach Anspruch 1, **dadurch gekennzeichnet, dass** der Aufweitabschnitt (16) einen im Außendurchmesser in Rohreinführrichtung zunehmenden Aufweitbereich (30, 24) aufweist, der mit einer Vortriebsstruktur (31, 28, 26), etwa einem Gewindegang bzw. einem Gewinde ausgebildet ist.

3. Rohrendenbearbeitungsvorrichtung nach einem der Ansprüche 1 oder 2, **dadurch gekennzeichnet, dass** der Aufweitabschnitt im axialen Längsschnitt einen Aufweitbereich aufweist, der wenigstens in etwa konvex oder konkav ist.

4. Rohrendenbearbeitungsvorrichtung nach einem der Ansprüche 2 oder 3, **dadurch gekennzeichnet, dass** die Vortriebsstruktur des Aufweitbereiches so ausgebildet ist, dass diese mit zunehmendem Außendurchmesser des Aufweitbereiches eine gesteuerte, insbesondere zunehmende Vortriebskraft bereitstellt.

5. Rohrendenbearbeitungsvorrichtung nach einem der Ansprüche 2 bis 4, **dadurch gekennzeichnet, dass** für den Fall, dass die Vortriebsstruktur ein Gewinde ist, dieses in einer Zone mit geringem Außendurchmesser eine größere Steigung aufweist, als in einer Zone (24) mit größerem Außendurchmesser des Aufweitbereiches.

6. Rohrendenbearbeitungsvorrichtung nach einem der Ansprüche 2 bis 5, **dadurch gekennzeichnet, dass** die Vortriebsstruktur etwa dort endet, wo der Außendurchmesser des Aufweitbereiches (30, 24) seinen größten Wert erreicht.

7. Rohrendenbearbeitungsvorrichtung nach einem der Ansprüche 1 bis 6, **dadurch gekennzeichnet, dass** zwischen dem Aufweitabschnitt und dem Entgratabschnitt eine Einschnürung (20) ausgebildet ist.

8. Rohrendbearbeitungsvorrichtung nach einem der Ansprüche 2 bis 7, **dadurch gekennzeichnet, dass** das Gewinde über seinen Verlauf eine unterschiedliche Gewindesteghöhe aufweist.

9. Rohrendbearbeitungsvorrichtung nach einem der Ansprüche 2 bis 8, **dadurch gekennzeichnet, dass** das Gewinde über seinen Verlauf eine unterschiedliche Schärfe des Gewindes aufweist.

10. Rohrendbearbeitungsvorrichtung nach einem der Ansprüche 1 bis 9, **dadurch gekennzeichnet, dass** der Entgratabschnitt (12, 18) mit einem Schutzring (12) abgeschirmt ist, der bevorzugt aus Kunststoff ist.
